# NEUE EUROPÄISCHE PATENTSCHRIFT

(11) **EP 2 319 606 B2**
(45) Veröffentlichungstag und Bekanntmachung des Hinweises auf die Entscheidung über den Einspruch: **07.08.2019**
(45) Hinweis auf die Patenterteilung: 18.05.2016
(21) Anmeldenummer: 11000800.0
(22) Anmeldetag: 04.11.2008
(51) Int. Cl.: C04B 35/195, C04B 35/478, C04B 35/565, C04B 38/00, C04B 111/00, F01N 3/022

(54) **Dieselpartikelfilter mit verbesserten Staudruckeigenschaften**
Diesel particulate filter with improved back pressure properties
Filtre à particules diesel doté de propriétés de pression dynamique améliorées

(43) Veröffentlichungstag der Anmeldung: 11.05.2011
(62) Teilanmeldung aus: 08168287.4
(73) Patentinhaber: UMICORE AG & CO. KG, 63457 Hanau-Wolfgang (DE)
(72) Erfinder: Dornhaus, Franz, Dr., Kobe 658-0063 (JP); Frantz, Stéphanie Dr., 63457 Hanau (DE); Jeske, Gerald, Dr., 63543 Neuberg (DE)

(56) Entgegenhaltungen:
- EP-A1- 2 168 662
- DE-A1-102006 040 739
- DE-A1-102007 021 468
- JP-A- 2002 320 807
- JP-A- 2007 144 371
- US-A- 4 749 671

## Beschreibung

Die Erfindung betrifft ein Verfahren zur Herstellung eines Dieselpartikelfilters mit verbesserten Staudruckeigenschaften, das sich zur Entfernung von Dieselruß aus dem Abgas von Dieselmotoren, insbesondere in Fahrzeugen, eignet.

Das Abgas von mit Dieselmotor betriebenen Kraftfahrzeugen enthält neben den Schadgasen Kohlenmonoxid (CO) und Stickoxide (NOₓ) auch Bestandteile, die aus der unvollständigen Verbrennung des Kraftstoffs im Brennraum des Zylinders herrühren. Dazu gehören neben Rest-Kohlenwasserstoffen, die meist ebenfalls überwiegend gasförmig vorliegen, Partikelemissionen, auch als "Dieselruß" oder "Rußpartikel" bezeichnet. Dabei handelt es sich um komplexe Agglomerate aus überwiegend Kohlenstoffhaltigen Feststoff-Teilchen und einer anhaftenden Flüssigphase, die meist mehrheitlich aus längerkettigen Kohlenwasserstoff-Kondensaten besteht. Die auf den festen Bestandteilen anhaftende Flüssigphase wird auch als "Soluble Organic Fraction SOF" oder "Volatile Organic Fraction VOF" bezeichnet.

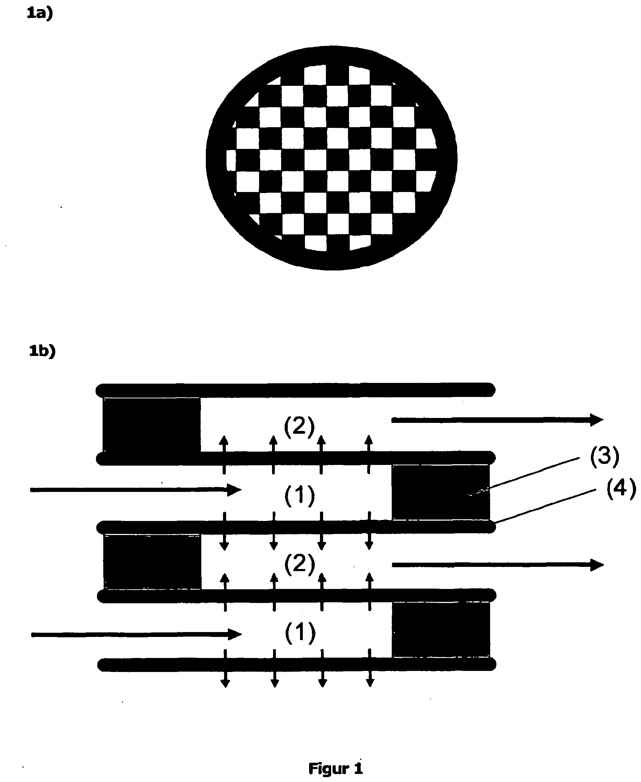

Zur Entfernung dieser Partikelemissionen werden Partikelfilter verwendet. Vor dem Hintergrund der aktuellen Feinstaub-Problematik werden zunehmend keramische Wandflussfiltersubstrate eingesetzt, die sich durch eine hohe Filtereffizienz auch gegenüber kleinen Partikeln auszeichnen. Diese Wandflussfiltersubstrate sind keramische Wabenkörper mit wechselseitig gasdicht verschlossenen An- und Abströmkanälen. Figur 1 zeigt schematisch ein solches Wandflussfiltersubstrat. Das in die Anströmkanäle (1) einströmende Partikel-haltige Abgas wird durch den auf der Austrittsseite befindlichen gasdichten Verschlußstopfen (3) zum Durchtritt durch die poröse Wand (4) gezwungen und tritt aus den auf der Anströmseite verschlossenen Abströmkanälen (2) aus dem Wandflussfiltersubstrat wieder aus. Dabei wird Dieselruß aus dem Abgas herausgefiltert.

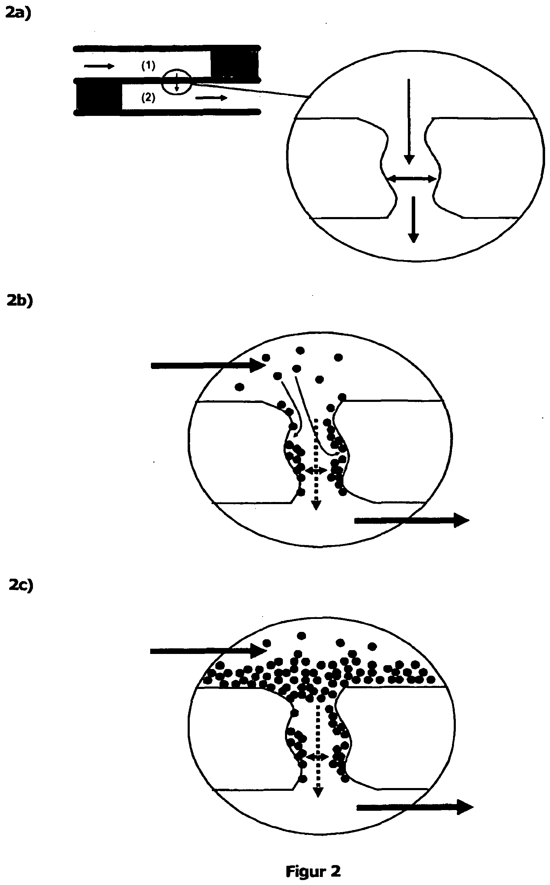

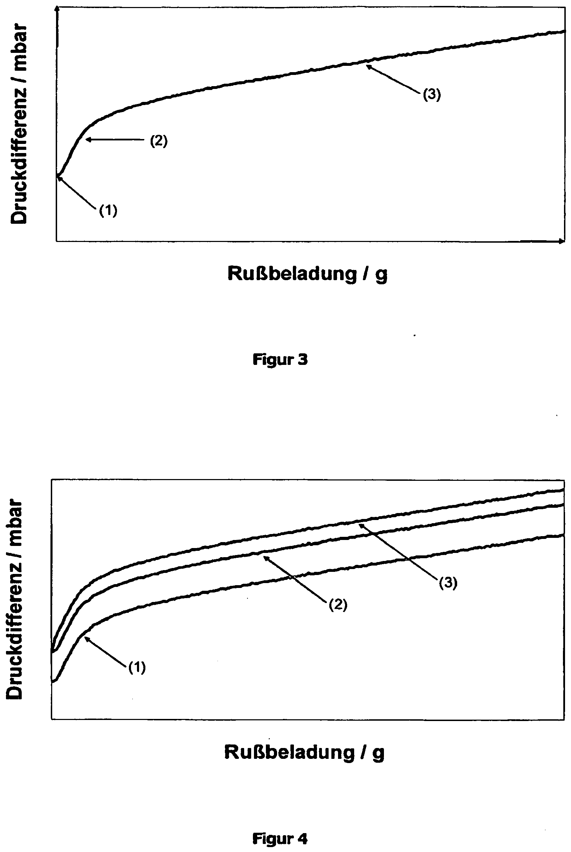

Die Rußfiltration im Wandflussfiltersubstrat beim Durchtritt durch die Wand kann als zweistufiger Vorgang beschrieben werden. In einer ersten Phase, der sogenannten "Tiefenfiltrationsphase" bleiben beim Durchtritt des partikelhaltigen Abgases durch die Wand Rußpartikel in den Poren der Wand haften [Figur 2b]. Dies führt zu einer Verkleinerung des Porendurchmessers in der Wand und infolgedessen zu einem sprunghaften Anstieg des Staudruckes über dem Wandflussfiltersubstrat. Sobald der Porendurchmesser zu stark verringert ist, um mittleren und größeren Rußteilchen den Eintritt in die Pore zu gestatten, setzt eine Filterkuchenbildung [Figur 2c] im gesamten Anströmkanal ein. Während des Aufbaus des Filterkuchens steigt der Staudruck über dem Wandflussfiltersubstrat nur noch linear mit der gefilterten Menge Dieselruß. Figur 3 zeigt schematisch die Entwicklung des Staudruckes über dem Wandflussfilter ausgehend vom rußfreien Filter als Funktion der aufgenommenen Rußmenge. (1) zeigt den Staudruck des unberußten Filters, (2) den Anstieg während der Tiefenfiltrationsphase und (3) die lineare Staudruckzunahme während der Filterkuchenbildungsphase.

Der vorstehend beschriebene zweistufige Vorgang der Rußfiltration im Wandflussfiltersubstrat ist allgemein gültig; er wird bei nicht beschichteten Wandflussfiltersubstraten ebenso beobachtet, wie bei Wandflussfiltersubstraten mit katalytisch aktiver Beschichtung, mit Rußzündbeschichtung oder mit Beschichtungen, die spezielle Ankerstrukturen zur Verbesserung der Filtrationseffizienz aufweisen. Die Ausgangskonfiguration des Wandflussfilters beeinflusst vornehmlich den Ausgangsstaudruck des Bauteils in unberußtem Zustand, wie Figur 4 zu entnehmen ist. Katalytisch beschichtete Wandflussfiltersubstrate oder solche mit einer typischen Rußzündbeschichtung (2) zeigen in unberußtem Zustand einen deutlich höheren Ausgangsstaudruck als unbeschichtete Wandflussfiltersubstrate (1); der Verlauf der Staudruckkurve mit zunehmender Rußbeladung aber ist mit dem Verlauf der Staudruckkurve des unbeschichteten Substrats (1) vergleichbar. Ein Substrat mit einer die Filtrationseffizienz erhöhenden Beschichtung (3) zeigt in der Regel einen Ausgangsstaudruck in unberußtem Zustand, der dem Ausgangsstaudruck von katalytisch beschichteten Wandflussfiltern vergleichbar ist. Der Anstieg des Staudruckes während der Tiefenfiltrationsphase ist jedoch erheblich steiler, da sich der Porenradius infolge der gezielt eingebauten Ankerstrukturen noch schneller verengt.

Grundsätzlich ist ein hoher Staudruck ebenso wie ein schneller Anstieg des Staudruckes bei Dieselpartikelfiltern, die in Kraftfahrzeugen eingesetzt werden, unerwünscht, da dieser im Betrieb dazu führt, dass Motorleistung aufgewendet werden muss, um Abgas durch die Abgasreinigungsanlage zu drücken. Diese Motorleistung geht für den Antrieb des Fahrzeugs verloren. Die optimale Ausnutzung der Motorleistung für den Antrieb ist jedoch gleichbedeutend mit einer Erhöhung der effektiven Kraftstoffausnutzung und bedeutet Kraftstoffverbrauchsvorteile und somit auch verminderte CO₂-Emissionen des Fahrzeugs.

Aus der EP 2 168 662 A1 ist bereits ein mit einem Katalysator beladener Filter bekannt. Er umfasst eine auf den Substratwänden liegende Schicht, die einen Porendurchmesser aufweist, der kleiner ist, als der der Substratwand und die Russpartikel abzufangen in der Lage ist.

Das Dokument DE 10 2006 040739 A1 beschreibt Filtersubstrate, die mit einer Schutzschicht, die das Eindringen von Partikeln verhindert, beschichtet sind.

Es ist Aufgabe der vorliegenden Erfindung, ein Verfahren zur Herstellung eines Dieselpartikelfilters zur Verfügung zu stellen, das sich durch verbesserte Staudruckeigenschaften auszeichnet, ohne dabei eine verminderte Filtrationseffizienz oder verschlechterte katalytische Eigenschaften oder verschlechterte Rußzündeigenschaften zu zeigen.

Diese Aufgabe wird gelöst durch ein Verfahren zur Herstellung eines Dieselpartikelfilters enthaltend ein keramisches Wandflussfiltersubstrat und eine in den Anströmkanälen aufgebrachte Beschichtung aus hochschmelzendem Material, die so beschaffen ist, dass sie die die Anströmkanäle und Abströmkanäle verbindenden Poren in der Wand anströmseitig für Rußpartikel verschließt, ohne dabei den Durchtritt der gasförmigen Abgasbestandteile zu verhindern, wobei die Beschichtung mehrheitlich ein oder mehrere hochschmelzende Oxide enthält, deren Partikelgrößen den Porengrößen in der Wand des Wandflussfiltersubstrates angepasst ist, mit den folgenden Verfahrensschritten:
a. Suspendieren eines Oxids in einer Menge Wasser, die mindestens zweimal so groß ist, wie das Porenvolumen des Oxids;
b. Mahlen der in Schritt a. erhaltenen wässrigen Suspension, bis das Oxid eine Partikelgrößenverteilung aufweist, die der Porengrößenverteilung in der Wand des Wandflussfiltersubstrates angepasst ist;
c. Einpumpen der erhaltenen Suspension in die Anströmkanäle des Wandflussfiltersubstrates, bis diese vollständig mit Suspension gefüllt sind;
d. Heraussaugen überstehender Suspension aus dem Wandflussfiltersubstrat, wobei die Saugleistung so zu wählen ist, dass am Ende des Vorgangs eine vorgegebene Beladungsmenge Feststoff im Anströmkanal verbleibt;
e. Trocknung des aus Schritt d. resultierenden Wandflussfiltersubstrates im Heißluftstrom bei 80 bis 180°C;
f. Kalzination des aus Schritt e., resultierenden Wandflussfiltersubstrates bei 250 bis 600°C,
wobei das Mahlen in Schritt b. erfolgt, bis der d₅₀-Wert der Partikelgrößenverteilung des Oxids gleich oder größer dem d₅-Wert der Porengrößenverteilung des Wandflussfiltersubstrates ist, wobei zugleich der d₉₀-Wert der Partikelgrößenverteilung des Oxids gleich oder größer dem d₉₅-Wert der Porengrößenverteilung des Wandflussfiltersubstrates ist,
wobei unter dem d₅₀-Wert bzw. dem d₉₀-Wert der Partikelgrößenverteilung des Oxids zu verstehen ist, dass 50 % bzw. 90 % des Gesamtvolumens des Oxids nur solche Partikel enthält, deren Durchmesser kleiner oder gleich dem als d₅₀ bzw. d₉₀ angegebenen Wert ist,
und wobei unter d₅-Wert bzw. dem d₉₅-Wert der Porengrößenverteilung des Wandflussfiltersubstrates zu verstehen ist, dass 5 % bzw. 95 % des gesamten, durch Quecksilberporosimetrie bestimmbaren Porenvolumens gebildet werden durch Poren, deren Durchmesser kleiner oder gleich dem als d₅ bzw. als d₉₅ angegebenen Wert ist und wobei das Oxid nach Mahlen eine Partikelgrößenverteilung mit einem d₅₀-Wert zwischen 10 und 15 µm und einem d₉₀-Wert zwischen 25 und 40 µm aufweist.

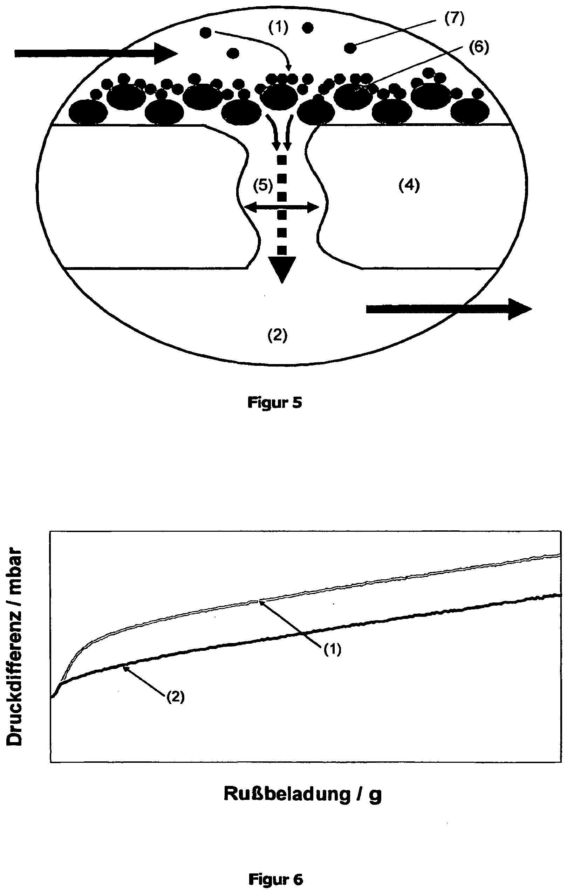

Die Beschichtung führt dazu, dass die Tiefenfiltration deutlich vermindert und somit der während der Tiefenfiltrationsphase zu beobachtende Staudruckanstieg signifikant verringert wird. Figur 6 zeigt schematisch den Effekt, der durch die aufgebrachte Beschichtung erzielt wird.

Das Konzept der Staudruck-Verringerung durch Aufbringung einer die Tiefenfiltration vermindernden Beschichtung in den Anströmkanälen kann grundsätzlich auf alle Wandflussfiltersubstrate angewandt werden. Bevorzugte Ausgestaltungen der erfindungsgemäßen Bauteile enthalten Wandflussfiltersubstrate, die aus Siliciumcarbid, Cordierit oder Aluminiumtitanat gefertigt sind und die in den Wänden zwischen An- und Abströmkanälen Poren mit einem mittleren Durchmesser zwischen 5 und 50 µm, besonders bevorzugt zwischen 10 und 25 µm, aufweisen.

Die wichtigsten erfindungsgemäßen Ausführungsformen werden nachfolgend detailliert beschrieben. Die erfindungsgemäße Beschichtung, deren Funktion darin liegt, die Tiefenfiltration deutlich zu vermindern, wird im Folgenden als "Overcoat" bezeichnet.

Erfindungsgemäß hergestellte Partikelfilter weisen einen Overcoat auf, der mehrheitlich ein oder mehrere hochschmelzende Oxide enthält. Damit der Overcoat so beschaffen ist, dass die die Anströmkanäle und Abströmkanäle verbindenden Poren für Rußpartikel verschlossen werden, ohne dabei den Durchtritt der gasförmigen Abgasbestandteile zu verhindern, müssen die für den Overcoat verwendeten Materialien sorgfältig ausgewählt werden. Insbesondere müssen die zu verwendenden Oxide eine Partikelgrößenverteilung aufweisen, die der Porengrößenverteilung in der Wand des Substrats angepasst ist. Die bestimmungsgemäße Funktion des Overcoats wird dann erfüllt, wenn der d₅₀-Wert der Partikelgrößenverteilung der Oxide gleich oder größer dem d₅-Wert der Porengrößenverteilung des Wandflussfiltersubstrates, und zugleich der d₉₀-Wert der Partikelgrößenverteilung der Oxide gleich oder größer dem d₉₅-Wert der Porengrößenverteilung des Wandflussfiltersubstrates ist. (Was unter den entsprechenden dₓ-Werten der Partikelgrößenverteilung einerseits, und der Porengrößenverteilung andererseits zu verstehen ist, wurde vorstehend bereits erläutert.) Die Oxide haben einen d₅₀-Wert zwischen 10 und 15 µm und einem d₉₀-Wert, der zwischen 25 und 40 µm liegt. Diese zeichnen sich neben einer optimierten Funktionalität hinsichtlich der Verringerung der Tiefenfiltration auch durch eine besonders gute Haftung auf dem Wandflussfiltersubstrat aus.

Bei einigen Oxiden lassen sich die geforderten Partikelgrößenbereiche gut durch gezieltes Vormahlen des Oxids vor Einbringen in das Wandflussfiltersubstrat einstellen. Um diesen Vorteil umfassend nutzen zu können, werden die Oxide des Overcoats bevorzugt ausgewählt aus der Gruppe bestehend aus Aluminiumoxid, Selten-Erdmetall-stabilisiertes Aluminiumoxid, Selten-Erdmetall-Sesquioxid, Titandioxid, Zirkonoxid, Cer-Zirkon-Mischoxid, Vanadiumpentoxid, Vanadiumtrioxid, Wolframtrioxid, Molybdäntrioxid und Mischungen davon. Besonders bevorzugt sind Oxide ausgewählt aus der Gruppe bestehend aus Aluminiumoxid, Selten-Erdmetall-stabilisiertes Aluminiumoxid, Selten-Erdmetall-Sesquioxid, Zirkonoxid und Mischungen davon.

Zeolith-basierte Materialien eignen sich im Allgemeinen nicht als oxidischer Overcoat, da die Partikelgrößen synthetischer Zeolithe meist mit mittleren Partikelgrößen von d₅₀ < 3 µm deutlich unter den hier geforderten Werten liegen.

Um eine möglichst optimale Funktionsweise des oxidischen Overcoats bei zugleich möglichst geringem Einfluss der die Tiefenfiltration vermindernden Beschichtung auf den Ausgangsstaudruck zu gewährleisten, wird der Overcoat bevorzugt mit einer Schichtdicke von 10 bis 150 µm, besonders bevorzugt 20 bis 100 µm in den Anströmkanälen des Wandflussfiltersubstrates aufgebracht. Für die vorstehend genannte Auswahl an möglichen oxidischen Overcoat-Materialien lassen sich entsprechende Schichtdicken bei einer Beladung von 1 bis 50 g/L Feststoff, bezogen auf das Volumen des Wandflussfiltersubstrates, darstellen. Besonders bevorzugt sind Beladungen von 1 bis 20 g/L Feststoff, ganz besonders vorteilhaft Schichtdicken von 1 bis 10 g/L Feststoff, bezogen auf das Volumen des Wandflussfiltersubstrates.

Zur Herstellung eines erfindungsgemäßen Dieselpartikelfilters mit oxidischem Overcoat wird ein geeignetes Oxid ausgewählt und in einer Menge Wasser suspendiert, die mindestens zweimal so groß ist, wie das Porenvolumen des ausgewählten Oxids. Gegebenenfalls wird die so erhaltene wässrige Suspension des Oxids mit Hilfe einer Dyno-Mühle bis zur Einstellung der geforderten Partikelgrößenverteilung vermahlen. Der Zusatz von Hilfsstoffen zur Erhöhung der Sedimentationsstabilität der Suspension in diesem Stadium des Herstellprozesses ist für die Funktion des herzustellenden Overcoats unschädlich, sofern sich diese Hilfsstoffe bei der Kalzination im letzten Präparationsschritt vollständig thermisch entfernen lassen. Auch die Beimischung von haftvermittelnden Agentien wie Kieselsäure und anderen anorganischen Solen ist unschädlich und kann in einigen Ausführungsformen gegebenenfalls von Vorteil sein. Die Suspension wird nach dem gegebenenfalls erfolgten Einstellen der Partikelgrößenverteilung durch Vermahlen in die Anströmkanäle des zu beschichtenden Wandflussfiltersubstrates eingepumpt. Nach vollständigem Füllen der Anströmkanäle mit der Suspension wird die überstehende Suspension aus dem Wandflussfiltersubstrat wieder herausgesaugt. Dabei ist die Saugleistung so zu wählen, dass am Ende des Vorgangs die vorgegebene Beladungsmenge Feststoff im Anströmkanal verbleibt. Das so hergestellte beschichtete Wandflussfiltersubstrat wird bei 80 bis 180°C im Heißluftstrom getrocknet und anschließend bei 250 bis 600°C, bevorzugt bei 300 bis 500°C, kalziniert. Es ist nach Kalzination ohne weitere Behandlung einsatzfertig.

Es wurde bereits erwähnt, dass das Konzept der Staudruck-Verringerung durch Aufbringung einer die Tiefenfiltration vermindernden Beschichtung (Overcoat) in den Anströmkanälen grundsätzlich auf alle Wandflussfiltersubstrate angewandt werden kann. Dazu zählen auch katalytisch beschichtete Wandflussfiltersubstrate oder Wandflussfiltersubstrate mit die Rußzündtemperatur absenkenden Beschichtungen.

Beispielsweise können Overcoats aus hochschmelzendem oxidischem Material, wie sie vorstehend beschrieben wurden, auf Wandflussfiltersubstrate aufgebracht werden, die eine katalytisch aktive Beschichtung und/oder eine die Rußzündtemperatur absenkende Beschichtung enthalten, welche überwiegend in den Poren der Wand zwischen An- und Abströmkanälen vorliegt. Die für eine optimale Wirksamkeit des oxidischen Overcoats bevorzugten Schichtdicken desselben können unter Umständen dazu führen, dass der Initialstaudruck des unberußten Teils stärker ansteigt, als eine Staudruckverminderung durch Vermeidung der Tiefenfiltration zu erzielen wäre.

Je nach Fahrzeugapplikation kann es auch vorteilhaft sein, auf ein erfindungsgemäßes Dieselpartikelfilter mit Overcoat eine zusätzliche katalytisch aktive Beschichtung oder/und eine zusätzliche, die Rußzündtemperatur absenkende Beschichtung aufzubringen. Eine solche Ausführungsform hat jedoch grundsätzlich den Nachteil, dass durch das übereinander Anordnen zweier Schichten in den Anströmkanälen der Initialstaudruck des unberußten Filters exorbitant ansteigt. Daher kommen solche Ausführungsformen nur für Sonderfahrzeugapplikationen in Frage, bei denen der Kraftstoffverbrauch nebensächlich ist, für die aber beispielsweise aufgrund geringer durchschnittlicher Betriebsbedingungen eine Rußzündung bei sehr geringen Temperaturen und/oder ein hohes Maß an kontinuierlicher Partikelfallenregeneration (CRT^{®}-Effekt) gefordert ist, so zum Beispiel für Baumaschinen und andere sogenannte "Non-Road"-Applikationen.

Für viele Fahrzeugapplikationen besonders gut geeignete Ausführungsformen erhält man, wenn man ausgehend von einem erfindungsgemäßen Dieselpartikelfilter mit oxidischem Overcoat zusätzlich eine katalytische Aktivierung der die Tiefenfiltration vermindernden Beschichtung vornimmt.

Wie vorstehend beschrieben werden die Oxide des Overcoats bevorzugt ausgewählt aus der Gruppe bestehend aus Aluminiumoxid, Selten-Erdmetall-stabilisiertes Aluminiumoxid, Selten-Erdmetall-Sesquioxid, Titandioxid, Zirkonoxid, Cer-Zirkon-Mischoxid, Vanadiumpentoxid, Vanadiumtrioxid, Wolframtrioxid, Molybdäntrioxid und Mischungen davon. Diese Oxide bilden nicht selten die Basis für die Rußzündtemperatur absenkende Beschichtungen und/oder für oxidationskatalytisch oder reduktionskatalytisch aktive Beschichtungen, die dazu verwendet werden können, die im Dieselabgas außer Dieselruß enthaltenen Schadgase Kohlenmonoxid, Rest-Kohlenwasserstoffe und Stickoxide in nicht schädliche Komponenten umzuwandeln. Somit kann eine zusätzliche katalytische Aktivierung der die Tiefenfiltration vermindernden Beschichtung durch Beimischung oder Imprägnierung von oxidations- oder reduktionskatalytisch wirkenden Komponenten und/oder von Komponenten, die die Rußzündtemperatur absenken können, erreicht werden.

Die Erfindung wird nachfolgend anhand einiger Figuren und Beispiele näher erläutert.

Es zeigen:
Figur 1: Schematische Darstellung eines Wandflussfiltersubstrates;
Figurenteil (1a) zeigt die Aufsicht auf die Stirnfläche mit wechselseitig (- in weiß dargestellt -) offenen und (- in schwarz dargestellt -) gasdicht verschlossenen Kanälen;
Figurenteil (1b) zeigt einen Ausschnitt aus dem Wandflussfiltersubstrat als Prinzipskizze, die die Funktionsweise verdeutlicht; darin bezeichnen:
   die Pfeile die Strömungsrichtung des Abgases;:
   (1) Anströmkanal;
   (2) Abströmkanal;
   (3) gasdichter Verschlussstopfen;
   (4) poröse, d.h. gasdurchlässige Wand.
Figur 2: Schematische Darstellung des Rußfiltrationsprozesses in einem Wandflussfiltersubstrat; darin bezeichnen:
   die Pfeile die Strömungsrichtung des Abgases;:
   (1) Anströmkanal;
   (2) Abströmkanal;
Figurenteil (2a) zeigt einen vergrößerten Ausschnitt aus der Wand des Wandflussfiltersubstrates mit Pore;
Figurenteil (2b) zeigt schematisch den Ablauf der Tiefenfiltration;
Figurenteil (2c) zeigt schematisch den Ablauf der Filterkuchenbildung;
Figur 3: Schematische Darstellung der Entwicklung des Staudruckes über einem Wandflussfiltersubstrat als Funktion der aufgenommenen Rußmenge; darin bezeichnet
   (1) den Anfangsstaudruck in rußfreiem Zustand
   (2) den Staudruckanstieg während der Tiefenfiltrationsphase;
   (3) den Staudruckanstieg während der Filterkuchenbildungsphase
Figur 4: Schematische Darstellung der Entwicklung des Staudruckes über unterschiedlichen Wandflussfiltersubstraten als Funktion der aufgenommenen Rußmenge; darin bezeichnet
   (1) die Entwicklung des Staudruckes über einem unbeschichteten Wandflussfiltersubstrat,
   (2) die Entwicklung des Staudruckes über einem Wandflussfiltersubstrat mit katalytischer Beschichtung oder Rußzündbeschichtung;
   (3) die Entwicklung des Staudruckes über einem Wandflussfiltersubstrat mit einer Beschichtung, die spezielle Ankerstrukturen zur Verbesserung der Filtrationseffizienz aufweist
Figur 5: Schematische Darstellung eines Ausschnitts eines erfindungsgemäßen Dieselpartikelfilters enthaltend ein keramisches Wandflussfiltersubstrat und eine in den Anströmkanälen (1) auf gebrachte Beschichtung (6) aus hochschmelzendem Material, die so beschaffen ist, dass sie die die Anströmkanäle (1) und die
   Abströmkanäle (2) verbindenden Poren (5) in der Wand (4) anströmseitig für Rußpartikel (7) verschließt, ohne dabei den Durchtritt der gasförmigen Abgasbestandteile zu verhindern.
Figur 6: Schematische Darstellung der Entwicklung des Staudruckes
   (1) über einem Wandflussfiltersubstrat nach dem Stand der Technik ohne eine die Tiefenfiltration vermindernde Beschichtung;
   (2) über einem erfindungsgemäßen Wandflussfiltersubstrat mit einer die Tiefenfiltration vermindernden Beschichtung.

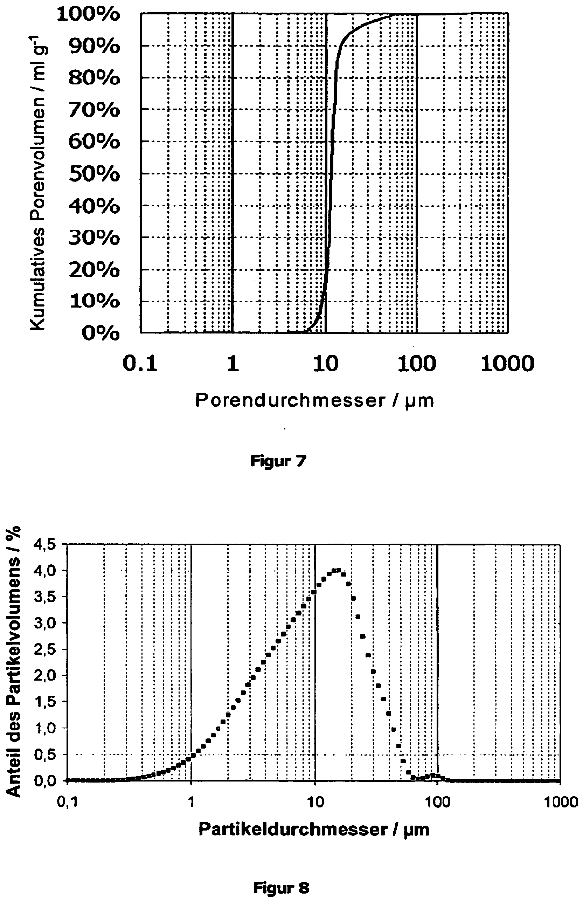

Figur 7: Mit Quecksilberporosimetrie bestimmte Porengrößenverteilung des keramischen Wandflussfiltersubstrates SD 031 der Fa. Ibiden in einfach-logarithmischer Auftragung
Figur 8: Partikelgrößenverteilung des Oxids zur Herstellung des oxidischen Overcoats aus Beispiel 2 nach Mahlung in einfach-logarithmischer Auftragung;

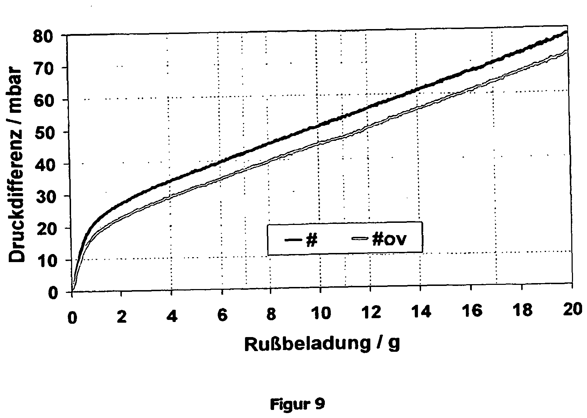

Figur 9: Staudruck-Vergleichsmessung des Dieselpartikelfilters ohne Overcoat (#) aus dem Vergleichsbeispiel und des Dieselpartikelfilters mit Overcoat (#ov) aus Beispiel 2, wobei beide gemessenen Kurven durch Subtraktion des um 1 verringerten Achsenabschnittswertes der Kurve für das Bauteil # ohne Overcoat korrigiert wurden.

### Beispiel 1 (nicht erfindungsgemäß):

Ein keramisches Wandflussfiltersubstrat SD 031 der Firma Ibiden, das die in Figur 7 angegebene Porengrößenverteilung und einen dso-Wert von 10 µm zeigte, wurde mit einer Beschichtung aus hochschmelzendem Fasermaterial versehen.

Hierzu wurde ein Natursteinfasermaterial mit einer mittleren Faserlänge von 125 µm und einem mittleren massenbezogenen Durchmesser der Fasern von 9 µm in Wasser suspendiert. Nach Zusatz von ca. 5 Gew.-% Kieselsäuresol ST-OUP von Nissan Chemical, bezogen auf die Gesamtfeststoffmenge, wurde die Suspension anströmkanalseitig durch das Wandflussfiltersubstrat durchgepumpt, wobei die durch das Substrat durchgepumpte Suspensionsmenge genau die insgesamt aufzubringende Menge Fasermaterial von 5 g/L, bezogen auf das Bauteilvolumen enthielt. Das so mit einer Fasermatte versehene Bauteil wurde bei 120°C im Heizgebläse getrocknet und anschließend ebenfalls im Heizgebläse für die Dauer von einer Stunde bei 350°C kalziniert.

Das so hergestellte Filter zeigte einen gegenüber dem unbeschichteten Substrat einen deutlich verringerten Staudruckanstieg durch Tiefenfiltration, gemessen als Funktion der Rußbeladungsmenge.

### Vergleichsbeispiel:

Zur Herstellung katalytisch beschichteter Dieselpartikelfilter nach dem Stand der Technik wurden zwei keramische Wandflussfiltersubstrate aus Aluminiumtitanat der Firma Corning mit einer Beschichtung aus katalytisch aktivem Material versehen.

Hierzu wurde zunächst ein edelmetallhaltiges Pulver als katalytisch aktive Komponente der Beschichtung hergestellt. Zum Erhalt dessen wurde ein mit 3 Gew.-% Lanthansesquioxid stabilisiertes γ-Aluminiumoxid mit einem Gemisch aus einer wässrigen Lösung einer Platinvorläuferverbindung und einer wässrigen Lösung einer Palladiumvorläuferverbindung porenfüllend imprägniert, wobei die Gesamtmenge der wässrigen Lösung, mit der das γ-Aluminiumoxid behandelt wurde, so gewählt war, dass die Rieselfähigkeit des Pulvers erhalten blieb. Das aus der Imprägnierung resultierende Feuchtpulver wurde über die Dauer von 10 Stunden bei 120°C getrocknet und anschließend für vier Stunden bei 300°C kalziniert. Das fertige edelmetallhaltige Pulver enthielt 11 Gew.-% Edelmetall, bezogen auf die Pulvergesamtmenge, mit einem Platin : Palladium-Verhältnis von 2:1.

Die so gewonnene katalytisch aktive Komponente der Beschichtung wurde unter Rühren in einer Menge Wasser suspendiert, die etwa der zweieinhalbfachen Wasseraufnahme des Pulvers entsprach. Die daraus erhaltene Suspension wurde unter Zuhilfenahme einer Dyno-Mühle gemahlen, bis die Partikelgrößenverteilung einen d₁₀₀-Wert zeigte, der kleiner als 7 µm war. Die Suspension wurde nach Einstellung eines geeigneten Feststoffgehaltes von unter 20 % durch Einpumpen in die Anströmkanäle und anschließendes Absaugen in die Wände der oben genannten Wandflussfiltersubstrate eingebracht. Die Filter wurden anschließend bei 120°C im Heizgebläse getrocknet und für die Dauer von vier Stunden bei 300°C in einem Stationärofen kalziniert. Die aufgebrachte Menge katalytisch aktiver Beschichtung betrug in den fertigen Dieselpartikelfiltern etwa 28 g/L, bezogen auf das Volumen des Bauteils.

### Beispiel 2:

Zur Herstellung eines erfindungsgemäßen Dieselpartikelfilters wurde eines der im Vergleichsbeispiel erhaltenen katalytisch beschichteten Dieselpartikelfilter mit einem oxidischen Overcoat versehen.

Zur Herstellung einer geeigneten Beschichtungssuspension für den Overcoat wurde eine geeignete Menge von mit 3 Gew.-% Lanthansesquioxid stabilisiertem Aluminiumoxid unter Rühren in einer Menge Wasser suspendiert, die etwa der zweieinhalbfachen Wasseraufnahme des eingesetzen Oxids entsprach. Die so erhaltene Suspension wurde unter Zuhilfenahme einer Dyno-Mühle gemahlen, bis die Partikelgrößenverteilung einen d₅₀-Wert von ca. 10 µm (exakt: 10,35 µm) und einen d₉₀-Wert von ca. 30 µm (exakt: 29,48 µm) aufwies. Figur 8 zeigt die Partikelgrößenverteilung des fertig gemahlenen suspendierten Oxids, gemessen mit dem Partikelgrößenmessgerät LS230 von Beckman Coulter.

Die Suspension wurde nach Einstellen eines geeigneten Feststoffgehaltes von ca. 18 % Feststoff auf eines der bereits katalytisch beschichteten Dieselpartikelfilter aus dem Vergleichsbeispiel durch Einpumpen der Beschichtungssuspension in die Anströmkanäle und anschließendes Absaugen aufgebracht. Das Filter wurde anschließend bei 120°C im Heizgebläse getrocknet, und für die Dauer von vier Stunden bei 350°C in einem Stationärofen kalziniert. Die dem Overcoat zuzuordnende Beladungsmenge im fertigen Dieselpartikelfilter betrug 5 g/L bezogen auf das Volumen des Bauteils.

Das Staudruck-Verhalten unter Rußbeladung wurde vergleichend am im Vergleichsbeispiel hergestellten katalytisch beschichteten Dieselpartikelfilter nach dem Stand der Technik und am erfindungsgemäßen Dieselpartikelfilter aus Beispiel 2 untersucht. Die Aufnahme der Staudruck-Kurven während der Beladung der Filter mit Ruß erfolgte mit dem "Diesel Particulate Generator" DPG der Firma Cambustion, dessen Messprinzip und -methodik dem Fachmann geläufig ist, unter den vom Lieferanten des Geräts empfohlenen Standardbedingungen.

Figur 9 zeigt das Ergebnis der vergleichenden Untersuchung des Staudruckes als Funktion der aufgenommenen Rußmenge. # bezeichnet das Dieselpartikelfilter ohne Overcoat aus dem Vergleichsbeispiel, #ov das Dieselpartikelfilter mit Overcoat aus Beispiel 2. In Figur 9 wurden beide gemessenen Kurven durch Subtraktion des um 1 verringerten Achsenabschnittswertes der Kurve für das Bauteil # ohne Overcoat korrigiert, um den direkten Einfluss des Overcoats zu zeigen.

Es ist deutlich zu erkennen, dass das Filter mit Overcoat #ov ausgehend vom gleichen Initialstaudruck einen erheblich geringeren Anstieg im auf die Tiefenfiltration zurückzuführenden Bereich der Staudruckkurve zeigt. Die beobachtete Staudruck-Differenz zwischen dem Dieselpartikelfilter mit Overcoat und dem Dieselpartikelfilter ohne Overcoat beträgt ca. 6 mbar.

## Patentansprüche

1. Verfahren zur Herstellung eines Dieselpartikelfilters enthaltend ein keramisches Wandflussfiltersubstrat und eine in den Anströmkanälen aufgebrachte Beschichtung aus hochschmelzendem Material, die so beschaffen ist, dass sie die die Anströmkanäle und Abströmkanäle verbindenden Poren in der Wand anströmseitig für Rußpartikel verschließt, ohne dabei den Durchtritt der gasförmigen Abgasbestandteile zu verhindern, wobei die Beschichtung mehrheitlich ein oder mehrere hochschmelzende Oxide enthält, deren Partikelgrößen den Porengrößen in der Wand des Wandflussfiltersubstrates angepasst ist, mit den folgenden Verfahrensschritten:
a. Suspendieren eines Oxids in einer Menge Wasser, die mindestens zweimal so groß ist, wie das Porenvolumen des Oxids;
b. Mahlen der in Schritt a. erhaltenen wässrigen Suspension, bis das Oxid eine Partikelgrößenverteilung aufweist, die der Porengrößenverteilung in der Wand des Wandflussfiltersubstrates angepasst ist;
c. Einpumpen der erhaltenen Suspension in die Anströmkanäle des Wandflussfiltersubstrates, bis diese vollständig mit Suspension gefüllt sind;
d. Heraussaugen überstehender Suspension aus dem Wandflussfiltersubstrat, wobei die Saugleistung so zu wählen ist, dass am Ende des Vorgangs eine vorgegebene Beladungsmenge Feststoff im Anströmkanal verbleibt;
e. Trocknung des aus Schritt d. resultierenden Wandflussfiltersubstrates im Heißluftstrom bei 80 bis 180°C;
f. Kalzination des aus Schritt e., resultierenden Wandflussfiltersubstrates bei 250 bis 600°C, wobei das Mahlen in Schritt b. erfolgt, bis der d₅₀-Wert der Partikelgrößenverteilung des Oxids gleich oder größer dem d₅-Wert der Porengrößenverteilung des Wandflussfiltersubstrates ist, wobei zugleich der d₉₀-Wert der Partikelgrößenverteilung des Oxids gleich oder größer dem d₉₅-Wert der Porengrößenverteilung des Wandflussfiltersubstrates ist,
wobei unter dem d₅₀-Wert bzw. dem d₉₀-Wert der Partikelgrößenverteilung des Oxids zu verstehen ist, dass 50 % bzw. 90 % des Gesamtvolumens des Oxids nur solche Partikel enthält, deren Durchmesser kleiner oder gleich dem als d₅₀ bzw. d₉₀ angegebenen Wert ist,
und wobei unter d₅-Wert bzw. dem d₉₅-Wert der Porengrößenverteilung des Wandflussfiltersubstrates zu verstehen ist, dass 5 % bzw. 95 % des gesamten, durch Quecksilberporosimetrie bestimmbaren Porenvolumens gebildet werden durch Poren, deren Durchmesser kleiner oder gleich dem als d₅ bzw. als d₉₅ angegebenen Wert ist und wobei das Oxid nach Mahlen eine Partikelgrößenverteilung mit einem d₅₀-Wert zwischen 10 und 15 µm und einem d₉₀-Wert zwischen 25 und 40 µm aufweist.

2. Verfahren nach Anspruch 1,
**dadurch gekennzeichnet,**
**dass** das Oxid ausgewählt ist aus der Gruppe bestehend aus Aluminiumoxid, Selten-Erd-stabilisiertes Aluminiumoxid, Selten-Erdmetall-Sesquioxid, Titandioxid, Zirkonoxid, Cer-Zirkon-Mischoxid, Vanadiumpentoxid, Vanadiumtrioxid, Wolframtrioxid, Molybdäntrioxid und Mischungen davon.

3. Verfahren nach einem der Ansprüche 1 bis 2,
**dadurch gekennzeichnet,**
**dass** das Wandflussfiltersubstrat aus Siliziumcarbid, Cordierit oder Aluminiumtitanat gefertigt ist und die Wände zwischen An- und Abströmkanälen Poren mit einem mittleren Durchmesser zwischen 5 µm und 50 µm aufweisen.

4. Verfahren nach Anspruch 3,
**dadurch gekennzeichnet,**
**dass** das Wandflussfiltersubstrat eine katalytisch aktive Beschichtung und/oder eine die Rußzündtemperatur absenkende Beschichtung enthält, welche überwiegend in den Poren der Wand zwischen An- und Abströmkanälen vorliegt.

5. Verfahren nach Anspruch 1,
**dadurch gekennzeichnet,**
**dass** der in Schritt b. erhaltenen Suspension vor Ausführung des Schrittes c.
Hilfsstoffe zur Erhöhung ihrer Sedimentationsstabilität zugesetzt werden, wobei diese Hilfsstoffe so gewählt sind, daß sie sich bei der Kalzination in Schritt f. vollständig thermisch entfernen lassen.

6. Verfahren nach Anspruch 1,
**dadurch gekennzeichnet,**
**dass** der in Schritt b. erhaltenen Suspension vor Ausführung des Schrittes c. haftvermittelnde Agentien wie Kieselsäure und andere anorganische Sole zugesetzt werden.

7. Verfahren nach Anspruch 1,
**dadurch gekennzeichnet,**
**dass** die Schichtdicke der aus Schritt d. resultierenden Beschichtung in den Anströmkanälen des Wandflussfiltersubstrats nach der Behandlung in den Schritten e. und f. 10 bis 150 µm beträgt.

## Claims

1. Method for producing a diesel particle filter containing a ceramic wall-flow filter substrate and a coating, applied to the inlet channels, of refractory material, provided in such a manner that it closes the wall pores connecting the inlet channels and discharge channels to soot particles on the inlet side without blocking the passage of the gaseous exhaust components, wherein the coating predominantly contains one or more refractory oxides, the particle size of which is adapted to the pore sizes in the wall of the wall-flow filter substrate, comprising the following method steps:
a. Suspending an oxide in a quantity of water that is at least twice as large as the pore volume of the oxide;
b. Grinding the aqueous suspension obtained in step a. until the oxide exhibits a particle size distribution that is adapted to the pore size distribution in the wall of the wall-flow filter substrate;
c. Pumping the suspension obtained into the inlet channels of the wall-flow filter substrate until said channels are completely filled with suspension;
d. Suctioning supernatant suspension from the wall-flow filter substrate, wherein the suction force is to be selected such that, at the end of the process, a predetermined loading quantity of solid remains in the inlet channel;
e. Drying the wall-flow filter substrate resulting from step d. in a stream of hot air at 80 to 180 °C;
f. Calcinating the wall-flow filter substrate resulting from step e. at 250 to 600 °C, wherein the milling of step b. takes place until the d₅₀ value of the particle size distribution of the oxide is equal to or greater than the d₅ value of the pore size distribution of the wall-flow filter substrate, wherein, at the same time, the d₉₀ value of the particle size distribution of the oxide is equal to or greater than the d₉₅ value of the pore size distribution of the wall-flow filter substrate,
wherein, the d₅₀ value or the d₉₀ value of the particle size distribution of the oxides is understood to mean that 50% or 90% of the total volume of the oxide contains only such particles whose diameters are less than or equal to the given d₅₀ or d₉₀ value,
and wherein the d₅ value or the d₉₅ value of the pore size distribution of the wall-flow filter substrate is understood to mean that 5% or 95% of the total pore volume, determined by mercury porosimetry, is formed by pores whose diameters are less than or equal to the value stated as d₅ or d₉₅, and wherein the oxide after grinding has a particle size distribution with a d₅₀ value between 10 and 15 µm and a d₉₀ value between 25 and 40 µm.

2. Method according to claim 1,
**characterized in that**
the oxide is selected from the group consisting of aluminum oxide, rare earth-stabilized aluminum oxide, rare earth metal sesquioxide, titanium dioxide, zirconium oxide, cerium-zirconium mixed oxide, vanadium pentoxide, vanadium trioxide, tungsten trioxide, molybdenum trioxide, and mixtures thereof.

3. Method according to one of claims 1 through 2,
**characterized in that**
the wall-flow filter substrate is made of silicon carbide, cordierite, or aluminum titanate, and the walls between the inlet and discharge channels have pores with a mean diameter of between 5 µm and 50 µm.

4. Method according to claim 3,
**characterized in that**
the wall-flow filter substrate contains a catalytically-active coating and/or a coating that lowers the soot ignition temperature, which coating is predominantly present in the pores of the wall between the inlet and discharge channels.

5. Method according to claim 1,
**characterized in that**,
before performing step c., auxiliary materials are added to the suspension obtained in step b. in order to increase its sedimentation stability, wherein these auxiliary materials are selected such that they can be completely removed thermally during the calcination in step f.

6. Method according to claim 1,
**characterized in that**,
before performing step c., bonding agents such as silicic acid and other inorganic sols are added to the suspension obtained in step b.

7. Method according to claim 1,
**characterized in that**
the layer thickness of the coating, resulting from step d., in the inlet channels of the wall-flow filter substrate, following treatment in steps e. and f., amounts to 10 to 150 µm.

## Revendications

1. Procédé de fabrication d'un filtre à particules diesel contenant un substrat de filtre à paroi filtrante à base de céramique et un revêtement en matériau à haut point de fusion appliqué dans les canaux d'admission, conçu de sorte qu'il ferme les pores, reliant les canaux d'admission et les canaux d'évacuation dans la paroi, côté admission pour les particules de suie, tout en permettant le passage des constituants gazeux des gaz d'échappement, le revêtement contenant majoritairement un ou plusieurs oxydes à haut point de fusion, dont les tailles des particules sont adaptées aux dimensions des pores dans la paroi du substrat de filtre à paroi filtrante, présentant les étapes de procédé suivantes :
a. mise en suspension d'un oxyde dans une quantité d'eau qui est au moins deux fois supérieure au volume des pores de l'oxyde ;
b. broyage de la suspension aqueuse obtenue dans l'étape a. jusqu'à ce que l'oxyde présente une distribution granulométrique des particules qui est adaptée à la distribution des dimensions des pores dans la paroi du substrat de filtre à paroi filtrante ;
c. pompage de la suspension obtenue dans les canaux d'admission du substrat de filtre à paroi filtrante, jusqu'à ce que ceux-ci soient totalement remplis par la suspension ;
d. extraction par aspiration de la suspension résiduelle hors du substrat de filtre à paroi filtrante, la puissance d'aspiration étant à choisir de sorte qu'à la fin du processus, une quantité de charge prédéfinie de solide reste dans le canal d'admission ;
e. séchage du substrat de filtre à paroi filtrante résultant de l'étape d. dans un flux d'air chaud à 80 °C jusqu'à 180 °C ;
f. calcination du substrat de filtre à paroi filtrante résultant de l'étape e. à 250 jusqu'à 600 °C, le broyage dans l'étape b. ayant lieu jusqu'à ce que la valeur d₅₀ de la distribution granulométrique des particules de l'oxyde soit supérieure ou égale à la valeur d₅ de la distribution des dimensions des pores du substrat de filtre à paroi filtrante, la valeur d₉₀ de la distribution granulométrique des particules de l'oxyde étant simultanément identique ou supérieure à la valeur d₉₅ de la distribution des dimensions des pores du substrat de filtre à paroi filtrante,
la valeur d₅₀ ou, selon le cas, la valeur d₉₀ de la distribution granulométrique des particules de l'oxyde signifiant que 50 % ou, selon le cas, 90 % du volume total de l'oxyde ne contiennent que des particules dont le diamètre est inférieur ou égal à la valeur indiquée comme d₅₀ ou, selon le cas, d₉₀,
et la valeur d₅ ou, selon le cas, la valeur d₉₅ de la répartition des dimensions des pores du substrat de filtre à paroi filtrante signifiant que 5 % ou, selon le cas, 95 % du volume total des pores, pouvant être déterminé par porosimétrie au mercure, sont formés par des pores dont le diamètre est inférieur ou égal à la valeur indiquée respectivement comme d₅ ou d₉₅ et l'oxyde présentant, après le broyage, une distribution granulométrique présentant une valeur d₅₀ entre 10 et 15 µm et une valeur d₉₀ entre 25 et 40 µm.

2. Procédé selon la revendication 1,
**caractérisé en ce que**
l'oxyde est choisi dans le groupe constitué par l'oxyde d'aluminium, l'oxyde d'aluminium stabilisé par des terres rares, le sesquioxyde de métal des terres rares, le dioxyde de titane, l'oxyde de zirconium, l'oxyde mixte de cérium et zirconium, le pentoxyde de vanadium, le trioxyde de vanadium, le trioxyde de tungstène, le trioxyde de molybdène et leurs mélanges.

3. Procédé selon l'une quelconque des revendications 1 à 2,
**caractérisé en ce que**
le substrat de filtre à paroi filtrante est fabriqué à partir de carbure de silicium, de cordiérite ou de titanate d'aluminium et **en ce que** les parois présentent, entre les pores des canaux d'admission et d'évacuation, un diamètre moyen compris entre 5 µm et 50 µm.

4. Procédé selon la revendication 3,
**caractérisé en ce que**
le substrat de filtre à paroi filtrante contient un revêtement à action catalytique et/ou un revêtement faisant baisser la température d'allumage de la suie, qui est présent principalement dans les pores de la paroi entre les canaux d'admission et d'évacuation.

5. Procédé selon la revendication 1,
**caractérisé en ce**
des matières auxiliaires sont ajoutées à la suspension obtenue dans l'étape b. avant la réalisation de l'étape c. afin d'augmenter sa stabilité de sédimentation, dans lequel ces matières auxiliaires sont choisies de telle sorte qu'elles puissent être totalement éliminées par voie thermique lors de la calcination de l'étape f..

6. Procédé selon la revendication 1,
**caractérisé en ce que**
des agents favorisant l'adhérence, tels que l'acide silicique et autres saumures inorganiques, sont ajoutés à la suspension obtenue dans l'étape b. avant la réalisation de l'étape c..

7. Procédé selon la revendication 1,
**caractérisé en ce que**
l'épaisseur de couche du revêtement résultant de l'étape d. dans les canaux d'admission du substrat de filtre à paroi filtrante après traitement des étapes e. et f. est comprise entre 10 et 150 µm.
